# EUROPÄISCHE PATENTSCHRIFT

(11) **EP 2 225 708 B1**
(45) Veröffentlichungstag und Bekanntmachung des Hinweises auf die Patenterteilung: **24.09.2014**
(21) Anmeldenummer: 08863379.7
(22) Anmeldetag: 18.12.2008
(51) Int. Cl.: G06K 19/14, G07D 7/00, G07D 7/12

(54) **VERFAHREN UND VORRICHTUNG ZUM ERKENNEN EINES ERZEUGNISSES**
METHOD AND APPARATUS FOR IDENTIFYING A PRODUCT
PROCÉDÉ ET DISPOSITIF POUR IDENTIFIER UN PRODUIT

(30) Priorität: 18.12.2007 DE 102007063415
(43) Veröffentlichungstag der Anmeldung: 08.09.2010
(73) Patentinhaber: BAM Bundesanstalt für Materialforschung und -prüfung, 12205 Berlin (DE)
(72) Erfinder: BECK, Uwe, 14612 Falkensee (DE); HERTWIG, Andreas, 12163 Berlin (DE); HÖNIG, Dirk, 37085 Göttingen (DE); DOMNICK, Ralph, 91054 Buckenhof (DE)
(74) Vertreter: Zimmermann & Partner
(86) Internationale Anmeldenummer: PCT/EP2008/011101
(87) Internationale Veröffentlichungsnummer: WO 2009/077208

(56) Entgegenhaltungen:
- WO-A-99/36805
- US-A- 4 501 439
- US-A- 4 767 205
- US-A1- 2003 058 443

## Beschreibung

Die vorliegende Erfindung betrifft ein Verfahren zum Erkennen eines Erzeugnisses oder von das Erzeugnis betreffenden Informationen, bei dem eine von dem Erzeugnis getragene Kodierung identifiziert wird. Die Erfindung betrifft ferner eine entsprechende Vorrichtung zum Erkennen eines Erzeugnisses oder von das Erzeugnis betreffenden Informationen sowie ein System zum Identifizieren von Erzeugnissen, das eine solche Vorrichtung und entsprechend kodierte Erzeugnisse umfasst. Die genannten Erzeugnisse können dabei durch verschiedenste Waren gegeben sein.

Derartige Verfahren und Vorrichtungen sind z.B. zur Erfassung von Strichcodes an sich bekannt. Nachteilig an diesen bekannten Verfahren ist die leichte Erkennbarkeit der verwendeten Kodierungen, aufgrund derer ein Imitieren der Kodierungen leicht möglich ist. Dadurch kann z.B. ein Identifizieren von Fälschungen gegenüber Originalen vereitelt werden.

Aus den Druckschriften US 4,767,205A; US 4,501,439A und WO 99/36805 A1 ist jeweils ein Verfahren und eine entsprechende Vorrichtung zum Erkennen eines Erzeugnisses oder von das Erzeugnis betreffenden Informationen bekannt, mit denen eine von dem Erzeugnis getragene versteckte Kodierung identifiziert wird.

Aus US 2003/0058443 A1 ist ein System zur spektroskopischen Streulichtmessung bekannt, mit dessen Hilfe Beugungsmuster von Gitterstrukturen auf Halbleiter-Wafern analysiert und zur Bestimmung der Dicke darunter liegender Schichten herangezogen werden.

Der vorliegenden Erfindung liegt also die Aufgabe zugrunde, ein anderes Verfahren zum Erkennen eines Erzeugnisses oder von das Erzeugnis betreffenden Informationen vorzuschlagen, mit dem der genannte Nachteil vermieden werden kann, das also insbesondere eine Imitierung der Kodierung praktisch unmöglich macht. Der Erfindung liegt ferner die Aufgabe zugrunde, eine in dieser Hinsicht verbesserte entsprechende Vorrichtung vorzuschlagen.

Diese Aufgabe wird erfindungsgemäß gelöst durch ein Verfahren mit den Merkmalen des Anspruchs 1 und durch eine Vorrichtung mit den Merkmalen des Anspruchs 13 sowie durch ein System nach dem Anspruch 15. Vorteilhafte Ausgestaltungen und Weiterentwicklungen der Erfindung ergeben sich mit den Merkmalen der Unteransprüche.

Bei dem vorgeschlagenen Verfahren zum Erkennen eines Erzeugnisses oder von das Erzeugnis betreffenden Informationen wird also eine von dem Erzeugnis getragene versteckte Kodierung identifiziert, wobei die Kodierung durch einen Satz ellipsometrischer Parameter gegeben ist und das Verfahren folgende Schritte umfasst:
- Messen ellipsometrischer Größen für mindestens eine definierte Stelle auf einer Oberfläche des Erzeugnisses,
- Vergleichen der gemessenen ellipsometrischen Größen mit mindestens einer Referenzkodierung und
- Feststellen einer Übereinstimmung der gemessenen ellipsometrischen Größen mit der Referenzkodierung oder einer der Referenzkodierungen oder Feststellen einer Nicht-Übereinstimmung mit jeder Referenzkodierung.

Bei der mindestens einen Referenzkodierung handelt es sich typischerweise um eine zuvor archivierte Kodierung oder eine an mindestens einer weiteren Stelle vorhandene natürliche Kodierung, die durch eine natürliche Oberflächenbeschaffenheit festgelegt sein kann, oder ein an definierter Stelle aufgebrachtes Label (z.B. ein Typenschild) oder eine versteckte Kodierung (z.B. eine Rückseite eines aufgeklebten Labels). Nachfolgend wird die Referenzkodierung durchgehend als archivierte Kodierung bezeichnet, wobei aber jeweils alle genannten Möglichkeiten eingeschlossen sein sollen. Die gestellte Aufgabe wird mit den vorgeschlagenen Maßnahmen insbesondere dadurch gelöst, dass die Kodierung - selbst wenn ihre z.B. durch ein Label gegebene Existenz sichtbar sein sollte - insofern versteckt ist, als die durch Oberflächeneigenschaften an der Stelle oder den Stellen der Kodierung definierten ausgewählten ellipsometrischen Größen mit dem bloßen Auge und herkömmlichen Mitteln - ohne Kenntnis der Kodierung selbst - nicht erkennbar sind.

Beim Messen der ellipsometrischen Größen können Änderungen einer Intensität und eines Polarisationszustandes von Licht gemessen werden, dass an der Oberfläche des Erzeugnisses reflektiert wird. Bei diesem Licht kann es sich um Licht mit Wellenlängen zwischen UV und NIR handeln. Insbesondere kann es sich dabei auch um sichtbares Licht handeln.

Typischerweise werden die ellipsometrischen Größen mit einem Ellipsometer gemessen, durch das Licht definierter Polarisation auf die mindestens eine definierte Stelle geleitet und eine polarisationsabhängige Intensität dieses Lichts nach einer Reflexion auf der Oberfläche detektiert wird. Eine im Hinblick auf eine möglichst weitgehend automatisierte Durchführung des Verfahrens bevorzugte Ausführung der Erfindung sieht vor, dass das Verfahren mit einer Vorrichtung durchgeführt wird, die dieses Ellipsometer und einen mit dem Ellipsometer verbundenen oder in das Ellipso-_ meter integrierten und als Datenbank für die mindestens eine Kodierung dienenden Speicher umfasst, wobei diese Vorrichtung das Vergleichen der gemessenen ellipsometrischen Größen mit der mindestens einen Kodierung und das Feststellen der Übereinstimmung oder Nicht-Übereinstimmung durchführt, indem die Vorrichtung dazu programmtechnisch entsprechend eingerichtet ist. Dabei kann es vorgesehen sein, dass die genannte Vorrichtung ein die festgestellte Übereinstimmung oder Nicht-Übereinstimmung wieder-spiegelndes Ergebnis ausgibt.

Dementsprechend wird mit der vorliegenden Erfindung eine Vorrichtung zum Erkennen eines Erzeugnisses oder von das Erzeugnis betreffenden Informationen durch Identifizieren einer von dem Erzeugnis getragenen versteckten Kodierung als vorteilhaft vorgeschlagen, die ein Ellipsometer zum Messen ellipsometrischer Größen einer Oberfläche des Erzeugnisses und einen mit dem Ellipsometer über eine Datenleitung verbundenen oder in das Ellipsometer integrierten Speicher umfasst, wobei der Speicher als Datenbank für mindestens einen dort gespeicherten und als Kodierung dienenden Satz ellipsometrischer Parameter fungiert und wobei die Vorrichtung programmtechnisch eingerichtet ist zum Vergleichen der mit dem Ellipsometer gemessenen ellipsometrischen Größen mit der mindestens einen im Speicher gespeicherten Kodierung und zum Feststellen einer Übereinstimmung der gemessenen ellipsometrischen Größen mit der gespeicherten Kodierung oder einer der gespeicherten Kodierungen und zum Feststellen einer Nicht-Übereinstimmung mit jeder dort gespeicherten Kodierung. Vorzugsweise gibt die genannte Vorrichtung ein die festgestellte Übereinstimmung oder Nicht-Übereinstimmung widerspiegelndes Ergebnis selbsttätig aus.

Neben herkömmlichen Ellipsometern seien in der vorliegenden Schrift auch als Handgeräte ausgeführte intensitäts- und phasenempfindlich messende Polarisationsdetektoren mit dem Begriff Ellipsometer bezeichnet.

Das Ellipsometer wird dazu typischerweise eine Lichtquelle für Licht definierter Polarisation sowie einen Detektor zum Erfassen einer polarisationsabhängigen Intensität von an der Oberfläche des Erzeugnisses reflektiertem Licht der Lichtquelle aufweisen. Die Lichtquelle, die vorzugsweise Licht einer definierten Wellenlänge oder Wellenlängenverteilung ausstrahlen kann, kann z.B. durch einen Laser oder durch eine mit entsprechenden Farbfiltern ausgestattete Weißlichtquelle gegeben sein. Die definierte Polarisation des Lichts kann durch Polarisationsfilter, eventuell ergänzt um λ/4-Plättchen oder vergleichbare Elemente, realisiert werden. Ein entsprechend vorteilhaftes System zum Identifizieren von Erzeugnissen umfasst schließlich neben einer derartigen Vorrichtung eine Gesamtheit von jeweils mit der Kodierung oder einer der Kodierungen versehenen Erzeugnissen, bei denen es sich um Waren beliebiger Art handeln kann.

Als Kodierung können unter Umständen natürliche Eigenschaften der Oberfläche der Erzeugnisse verwendet werden. Eine besonders vorteilhafte Ausführung der Erfindung sieht jedoch vor, dass die Kodierung an der genannten mindestens einen für die Messung verwendeten Stelle des Erzeugnisses künstlich aufgebracht wird, z.B. durch Beschichten und/oder Strukturieren der Oberfläche.

Die in den Unteransprüchen genannten Merkmale sind vorteilhaft insbesondere im Hinblick darauf, dass in ausgesprochen schlecht erkennbarer und dementsprechend schwierig imitierbarer Weise eine unter Umständen große Zahl von Informationen kodiert und mit dem beschriebenen Verfahren erkannt werden kann.

Ausführungsbeispiele der Erfindung werden nachfolgend anhand der Figuren 1 bis 4 erläutert. Es zeigt
- Fig. 1: eine schematische Darstellung einer Vorrichtung zum Erkennen eines Erzeugnisses in einer Ausführung der Erfindung,
- Fig. 2: eine perspektivische Aufsicht auf einen O-berflächenausschnitt eines mit dieser Vorrichtung untersuchten kodierten Erzeugnisses,
- Fig. 3: Einen Ausschnitt eines Querschnitts durch das Erzeugnis aus Fig. 2 und
- Fig. 4: einen Ausschnitt eines vergrößerten Querschnitts durch ein entsprechend kodiertes Erzeugnis in einer anderen Ausführung der Erfindung.

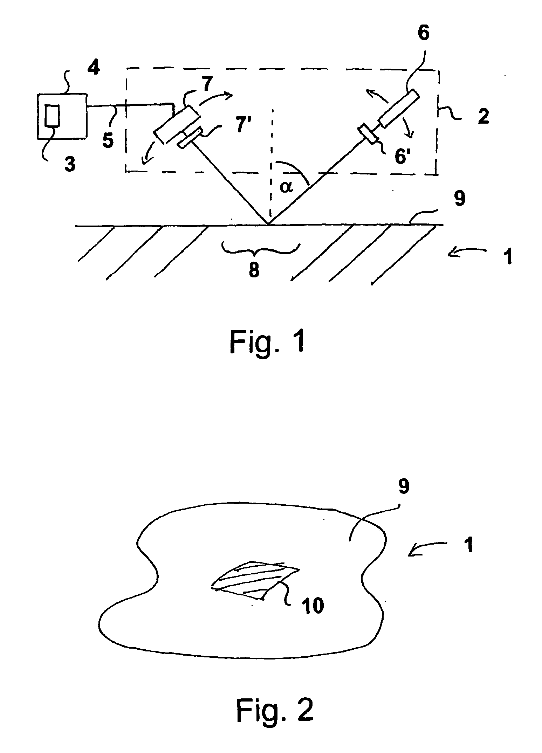

Die in Fig. 1 gezeigte Vorrichtung zum Erkennen eines Erzeugnisses 1 oder von das Erzeugnis 1 betreffenden Informationen umfasst ein Ellipsometer 2 und eine mit einem Speicher 3 ausgestattete Datenverarbeitungsanlage 4, die über eine Datenleitung 5 mit dem Ellipsometer verbunden ist. Selbstverständlich kann die Datenverarbeitungsanlage 4 auch in das Ellipsometer 1 integriert sein.

Das Ellipsometer 2 weist eine Lichtquelle 6 - beispielsweise einen Laser oder eine mit einem Farbfilter oder einem Satz von Farbfiltern versehene Weißlichtquelle - auf die mit einem Polarisator 6' versehen ist und so polarisiertes Licht auf zumindest eine Stelle 8 auf eine Oberfläche 9 des Erzeugnisses 1 wirft. Dieses Licht hat im vorliegenden Ausführungsbeispiel eine definierte Wellenlänge im UV- oder im nahen IR-Bereich. Alternativ kann dieLichtquelle 6 auch zum Ausstrahlen von Licht eines definierten Wellenlängenspektrums verschiedener Wellenlängen ausgelegt sein. Nach einer Reflexion an der Oberfläche 9 fällt dieses Licht nun durch einen Polarisationsfilter 7' in einen Detektor 7, wobei zumindest der Polaristationsfilter 8 - eventuell auch der Polarisator 6' - drehbar ausgeführt ist. Der Detektor 7 dient so zum Erfassen einer polarisationsabhängigen Intensität des reflektierten Lichts. Diese Anordnung erlaubt damit eine Messung ellipsometrischer Größen für die Stelle 8 der Oberfläche 9 des Erzeugnisses 1 in Abhängigkeit von der schon genannten Wellenlänge und einem in Fig. 1 eingezeichneten Einfallswinkel α, der - wie durch Pfeile angedeutet - variiert werde kann.

Nun trägt das Erzeugnis 1 eine versteckte Kodierung, die durch einen Satz ellipsometrischer Parameter gegeben ist, die den an der Stelle 8 oder an mehreren derartigen definierten Stellen 8 gemessenen ellipsometrisxchen Größen entsprechen. Diese Kodierung ist zuvor archiviert worden durch Speichern der Parameter in dem Speicher 3. Zusätzlich können dort weitere Kodierungen für andere Erzeugnisse gespeichert sein. Bei dem Erzeugnis 1 handelt es sich dementsprechend um eines aus einer ganzen Gesamtheit entsprechend kodierter Erzeugnisse.

Die gemessenen ellipsometrischen Größen werden nun mit der zuvor im Speicher 3 gespeicherten Kodierung oder den dort archivierten Kodierungen verglichen, wobei durch eine entsprechende programmtechnische Einrichtung der Datenverarbeitungsanlage 4 eine Übereinstimmung der gemessenen ellipsometrischen Größen mit der archivierten Kodierung oder mit einer der archivierten Kodierungen oder aber eine Nicht-Übereinstimmung mit jeder archivierten Kodierung festgestellt wird. Die Datenverarbeitungsanlage 4 gibt schließlich ein die festgestellte Übereinstimmung oder Nicht-Übereinstimmung widerspiegelndes Ergebnis aus.

Der als Kodierung dienende Satz ellipsometrischer Parameter für die definierte Stelle 8 oder für jede der definierten Stellen 8 auf der Oberfläche 9 des Erzeugnisses 1 umfasst für jede von mehreren Kombinationen aus mindestens einer definierten Wellenlänge oder Wellenlängenverteilung der Lichtquelle 6 und mehreren definierten Einfallswinkeln α (vorzugsweise zwischen 30° und 60°) jeweils zwei Werte. Die ellipsometrischen Größen werden dementsprechend für alle diese Kombinationen aus Wellenlängen oder Wellenlängenverteilungen und Einfallswinkeln α gemessen. Die genannten zwei Werte sind dabei jeweils durch einen Betrag Ψ eines Quotienten zweier Reflexionskoeffizienten für zwei verschiedene Polarisationen und durch eine (auch als Phasendifferenz der Phasenverschiebungen bezeichnete) Änderung Δ einer Phasenverschiebung zwischen reflektierten Lichtkomponenten dieser Polarisationen gegeben. Dabei gilt beispielsweise Ψ = rₚ/rₛ und Δ = δₚ - δₛ, wobei rₚ und rₛ Reflexionskoeffizienten für zwei verschiedene Polarisationen bezeichnen und δₚ und δₛ Phasenverschiebungen für Licht dieser Polarisationen. Wenn die Lichtquelle 6 - z.B. durch einen Satz mehrerer Farbfilter - zum Ausstrahlen verschiedener Wellenlängen geeignet ausgeführt wird, können die ellipsometrischen Daten auch für zwei oder mehrere verschiedene Wellenlängen oder Wellenlängenverteilungen gemessen werden. Dann enthält natürlich auch die Kodierung Parameter für entsprechend viele Wellenlängen oder Wellenlängenspektren.

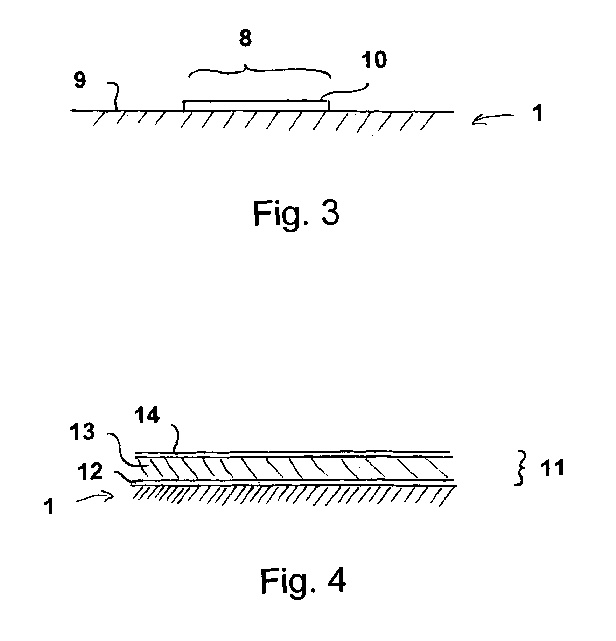

Für das beschriebene Verfahren könnte die natürliche - dabei jedoch sehr produktspezifische - Oberflächeneigenschaft des Erzeugnisses 1 als die Kodierung definierend verwendet werden. Bei dem vorliegenden Ausführungsbeispiel ist die Kodierung jedoch an der mindestens einen Stelle 8 des Erzeugnisses 1 künstlich durch Beschichten und eventuell zusatzliches Strukturieren der Oberfläche 9 als Label 10 aufgebracht worden, das in Fig. 2 dargestellt ist. Dort ist ein Ausschnitt einer perspektivischen Aufsicht auf die Oberfläche 9 des Erzeugnisses 1 dargestellt. Das Label 10 hat hier eine Fläche von etwa 1 cm². einen Querschnitt durch dieselbe Oberfläche 9 zeigt Fig. 3. Das Label 10 ist hier durch eine mit bloßem Auge nicht oder kaum erkennbare Schicht von etwa 40nm Dicke realisiert. Alternativ können aber auch dickere Schichten von z.B. bis zu 1 µm verwendet werden. Die genannte Schicht ist hier durch SiO, TiO oder ein anderes Oxid oder durch Titan-Nitrid oder ein anderes Nitrid gebildet. Auch andere insbesondere dielektrische Materialien mit definierter Oberflächenstruktur und Schichtdicke können verwendet werden. Die genannten Materialien eignen sich wegen ihrer Beständigkeit, also ihrer Langzeitstabilität, zum Kodieren in beschriebener Art. Zusätzlich kann das Label 10 mit einer räumlichen Struktur gestaltet sein, so dass die künstlich Kodierung eine definierte Ortsabhängigkeit der ellipsometrischen Größen beinhaltet. Die Kodierung kann z.B. einen Strichcode enthalten, wenn die das Label 10 bildende Schicht entsprechend unterbrochen ausgeführt wird. Das ist zwar nicht notwendig, erlaubt jedoch eine Kodierung einer größeren Menge von Informationen.

Typischerweise wird die Kodierung ausschließlich durch Oberflächeneigenschaften des aufgebrachten Labels 10 definiert sein. Alternativ kann sie auch durch eine Kombination von Oberflächeneigenschaften des Labels 10 und eines das Label 10 umgebenden natürlich belassenen Teils der Oberfläche 9 definiert ist. Das macht die Kodierung sicherer im Hinblick auf die so ausgeschlossene Möglichkeit, das Label 10 abzulösen und erfolgreich auf einem Plagiat des Erzeugnisses 1 aufzubringen. Um auch die Ortsabhängigkeit der ellipsometrischen Größen bestimmen zu können, werden diese Größen bei der vorliegenden Ausführung des Verfahrens zum Erkennen des Erzeugnisses 1 durch Imaging Ellipsometrie (mit flächenhafter Erfassung der Oberfläche 9 bezüglich der ellipsometrischen Eigenschaften) gemessen, beispielsweise durchgeführt als sogenannte Null-Ellipsometrie und vorzugsweise auch in einer Umgebung des Brewster-Winkels. Das Label 10 kann zur Realisierung signifikanter ellipsometrischer Größen für eine geeignete Kodierung auch mit Pigmenten oder z.B. UV-aktiven Fasern versehen sein.

In Fig. 4 ist ein Ausschnitt durch ein vergleichbares Label 10 bei einer anderen Ausführung der Erfindung gezeigt. Auch hier ist eine entsprechende Kodierung durch das Label 10 in Form einer Beschichtung auf eine Oberfläche eines Erzeugnisses 1 aufgebracht. Dabei bildet das Label 10 hier ein Fabry-Perot-Schichtsystem 11, das eine untere, spiegelnde metallische Schicht 12, eine transparente Zwischenschicht 13 und darauf eine metallische semitransparente Schicht 14. Jede der Schichten 12 und 14 kann z.B. aus Aluminium, Titan, Chrom oder Silber, Gold oder Kupfer gebildet sein. Die Schicht 14 ist ausgesprochen dünn, im Hinblick auf die Semitransparenz vorzugsweise nicht dicker als 40 nm. Die Zwischenschicht 13 kann wieder aus den wegen ihrer Beständigkeit vorteilhaften Materialien für das Label 10 aus den Figuren 2 und 3 gebildet sein, also aus SiO, TiO oder einem anderen Oxid oder aus Titan-Nitrid oder einem anderen Nitrid. Selbstverständlich kann auf der Schicht 14 noch eine kratzfeste transparente Schutzschicht angeordnet sein, die in der Figur 4 nicht dargestellt ist.

Die bei den vorliegenden Ausführungsbeispielen durch das jeweilige Label 10 realisierte Kodierung kann für eine Echtheit des Erzeugnisses, für eine Zuordung des Erzeugnisses zu einer definierten Serie oder für eine vorgenommene Wartung oder eine definierte Behandlung oder für einen Ermüdungszustand des Erzeugnisses 1 stehen.

## Patentansprüche

1. Verfahren zum Erkennen eines Erzeugnisses (1) oder von das Erzeugnis (1) betreffenden Informationen, bei dem eine von dem Erzeugnis (1) getragene versteckte Kodierung identifiziert wird, **dadurch gekennzeichnet, dass** die Kodierung durch einen Satz ellipsometrischer Parameter gegeben ist und das Verfahren folgende Schritte umfasst:
- Messen ellipsometrischer Größen für mindestens eine definierte Stelle (8) auf einer Oberfläche (9) des Erzeugnisses (1),
- Vergleichen der gemessenen ellipsometrischen Größen mit mindestens einer Referenzkodierung,
- Feststellen einer Übereinstimmung der gemessenen ellipsometrischen Größen mit der Referenzkodierung oder einer der REferenzkodierungen oder Feststellen einer Nicht-Übereinstimmung mit jeder Referenzkodierung.

2. Verfahren nach Anspruch 1, **dadurch gekennzeichnet, dass** der als Kodierung dienenden Satz ellipsometrischer Parameter für die definierte Stelle (8) oder für jede der definierten Stellen (8) auf der Oberfläche (9) des Erzeugnisses (1) jeweils für jede von mehreren Kombinationen aus mindestens einer definierten Wellenlänge oder Wellenlängenverteilung oder einem Wellenlängenbereich und mindestens einem definierten Einfallswinkel (α) zwei Werte umfasst, wobei die ellipsometrischen Größen für alle diese Kombinationen aus Wellenlängen oder Wellenlängenverteilungen und Einfallswinkeln (α) gemessen werden.

3. Verfahren nach Anspruch 2, **dadurch gekennzeichnet, dass** die genannten zwei Werte jeweils gegeben sind durch einen Betrag Ψ eines Quotienten zweier Reflexionskoeffizienten für zwei verschiedene Polarisationen und durch eine Änderung Δ einer Phasenverschiebung zwischen reflektiertem Licht dieser Polarisationen.

4. Verfahren nach einem der Ansprüche 1 bis 3, **dadurch gekennzeichnet, dass** die ellipsometrischen Größen für mindestens zwei verschiedene Einfallswinkel (α) und/oder mindestens zwei verschiedene Wellenlängen oder Wellenlängenverteilungen gemessen werden.

5. Verfahren nach einem der Ansprüche 1 bis 4, **dadurch gekennzeichnet, dass** die Oberfläche (9) des Erzeugnisses (1) zum Messen der ellipsometrischen Größen mit ultraviolettem Licht und/oder mit Licht aus dem nahen Infrarotbereich beleuchtet wird.

6. Verfahren nach einem der Ansprüche 1 bis 5, **dadurch gekennzeichnet, dass** die Kodierung zuvor an der mindestens einen Stelle (8) des Erzeugnisses (1) künstlich durch Beschichten und/oder Strukturieren der Oberfläche (9) aufgebracht worden ist, wobei die künstlich aufgebrachte Kodierung durch ein Fabry-Perot-Schichtsystem (11) oder ein dielektrisches Schichtsystem gegeben ist.

7. Verfahren nach Anspruch 6, **dadurch gekennzeichnet, dass** die künstlich aufgebrachte Kodierung mit dem bloßen Auge nicht erkennbar ist.

8. Verfahren nach einem der Ansprüche 6 oder 7, **dadurch gekennzeichnet, dass** die künstlich aufgebrachte Kodierung eine definierte Ortsabhängigkeit der ellipsometrischen Größen beinhaltet.

9. Verfahren nach Anspruch 8, **dadurch gekennzeichnet, dass** die Kodierung einen Strichcode oder mindestens eine andere geometrische Kodierung enthält.

10. Verfahren nach einem der Ansprüche 6 bis 9, **dadurch gekennzeichnet, dass** die Kodierung ausschließlich durch Oberflächeneigenschaften mindestens eines aufgebrachten Labels (10) oder durch eine Kombination von Oberflächeneigenschaften mindestens eines aufgebrachten Labels (10) und einer das mindestens eine Label (10) umgebenden natürlichen Oberfläche (9) definiert ist.

11. Verfahren nach einem der Ansprüche 1 bis 10, **dadurch gekennzeichnet, dass** die ellipsometrischen Größen durch Null-Ellipsometrie und/oder durch Imaging Ellipsometrie gemessen werden.

12. Verfahren nach einem der Ansprüche 1 bis 11, **dadurch gekennzeichnet, dass** die Kodierung für eine Echtheit des Erzeugnisses (1), für eine Zuordung des Erzeugnisses (1) zu einer definierten Serie oder für eine vorgenommene Wartung oder definierte Behandlung oder für einen Ermüdungszustand des Erzeugnisses (1) steht.

13. Vorrichtung zum Erkennen eines Erzeugnisses oder von das Erzeugnis (1) betreffenden Informationen durch Identifizieren einer von dem Erzeugnis (1) getragenen versteckten Kodierung, **dadurch gekennzeichnet, dass** die Vorrichtung
- ein Ellipsometer (2) zum Messen ellipsometrischer Größen einer Oberfläche (9) des Erzeugnisses (1) und
- einen mit dem Ellipsometer (2) über eine Datenleitung (5) verbundenen oder in das Ellipsometer (2) integrierten Speicher (3), der als Datenbank für mindestens einen dort gespeicherten und als Kodierung dienenden Satz ellipsometrischer Parameter fungiert,
umfasst, wobei die Vorrichtung programmtechnisch eingerichtet ist zum Vergleichen der mit dem Ellipsometer (2) gemessenen ellipsometrischen Größen mit der mindestens einen im Speicher (3) gespeicherten-Kodierung und zum Feststellen einer Übereinstimmung der gemessenen ellipsometrischen Größen mit der gespeicherten Kodierung oder einer der gespeicherten Kodierungen und zum Feststellen einer Nicht-Übereinstimmung mit jeder dort gespeicherten Kodierung.

14. Vorrichtung nach Anspruch 13, **dadurch gekennzeichnet, dass** sie programmtechnisch zum Durchführen eines der Verfahrens 1 bis 12 eingerichtet ist.

15. System zum Identifizieren von Erzeugnissen, umfassend eine Vorrichtung nach einem der Ansprüche 13 oder 14 und eine Gesamtheit von jeweils mit der Kodierung oder einer der Kodierungen versehenen Erzeugnissen (1).

16. Verwendung einer Vorrichtung gemäß den Ansprüchen 13 oder 14 für das Erkennen der Echtheit des Erzeugnisses (1), für die Zuordnung des Erzeugnisses (1) zu einer definierten Serie, für das Erkennen einer vorgenommenen Wartung des Erzeugnisses (1), für das Erkennen einer definierten Behandlung des Erzeugnisses (1) oder für das Erkennen eines Ermüdungszustandes des Erzeugnisses (1).

## Claims

1. A method for detecting a product (1) or information relating to the product (1), in which a hidden coding carried by the product (1) is identified, **characterised in that** the coding is realised by a set of ellipsometric parameters and the method comprises the following steps:
- measuring ellipsometric values for at least one defined position (8) on a surface (9) of the product (1),
- comparing the measured ellipsometric values using at least one reference coding,
- determining a match of the measured ellipsometric values to the reference coding or one of the reference codings or determining a no-match to any reference coding.

2. The method according to Claim 1, **characterised in that** the set of ellipsometric parameters for the defined position (8) or for each of the defined positions (8) on the surface (9) of the product (1), which set is used as coding, in each case comprises two values for each of a plurality of combinations of at least one defined wavelength or wavelength distribution or a wavelength range and at least one defined angle of incidence (α), wherein the ellipsometric values for all of these combinations of wavelengths or wavelength distributions and angles of incidence (α) are measured.

3. The method according to Claim 2, **characterised in that** the two values mentioned in each case result from a value Ψ of a quotient of two reflection coefficients for two different polarisations and from a change Δ of a phase shift between reflected light of these polarisations.

4. The method according to one of Claims 1 to 3, **characterised in that** the ellipsometric values for at least two different angles of incidence (α) and/or at least two different wavelengths or wavelength distributions are measured.

5. The method according to one of Claims 1 to 4, **characterised in that** the surface (9) of the product (1) is illuminated for measuring the ellipsometric values using ultraviolet light and/or using light from the near-infra-red range.

6. The method according to one of Claims 1 to 5, **characterised in that** the coding has been previously applied on the at least one position (8) of the product (1) artificially by coating and/or structuring of the surface (9), wherein
the artificially applied coding is realised by a Fabry-Pérot layer system (11) or a dielectric layer system.

7. The method according to Claim 6, **characterised in that** the artificially applied coding cannot be recognised with the naked eye.

8. The method according to one of Claims 6 or 7, **characterised in that** the artificially applied coding contains a defined location dependence of the ellipsometric values.

9. The method according to Claim 8, **characterised in that** the coding contains a bar code or at least one other geometric coding.

10. The method according to one of Claims 6 to 9, **characterised in that** the coding is defined exclusively by surface characteristics of at least one applied label (10) or by a combination of surface characteristics of at least one applied label (10) and a natural surface (9) surrounding the at least one label (10).

11. The method according to one of Claims 1 to 10, **characterised in that** the ellipsometric values are measured by null ellipsometry and/or by imaging ellipsometry.

12. The method according to one of Claims 1 to 11, **characterised in that** the coding represents an authenticity of the product (1), assignment of the product (1) to a defined batch or maintenance or defined handling undertaken or a fatigue state of the product (1).

13. A device for detecting a product or information relating to the product (1) by identifying a hidden coding carried by the product (1), **characterised in that** the device comprises
- an ellipsometer (2) for measuring ellipsometric values of a surface (9) of the product (1) and
- a memory (3) connected to the ellipsometer (2) via a data line (5) or a memory (3), integrated into the ellipsometer (2), which functions as a database for at least one set of ellipsometric parameters stored there and used as coding, wherein the device is set up from the point of view of programming technology to compare the ellipsometric values measured using the ellipsometer (2) with the at least one coding stored in the memory (3) and for determining a match of the measured ellipsometric values with the stored coding or one of the stored codings and for determining a no-match with any coding stored there.

14. The device according to Claim 13, **characterised in that** the same is set up from the point of view of programming technology for carrying out one of the methods 1 to 12.

15. A system for identifying products, comprising a device according to one of Claims 13 or 14 and an entirety of products (1) respectively provided with the coding or one of the codings.

16. A use of a device according to Claims 13 or 14 for the detection of the entirety of the product (1) for the assignment of the product (1) to a defined series, for detecting a maintenance undertaken for the product (1), for detecting a defined treatment of the product (1) or for detecting a fatigue state of the product (1).

## Revendications

1. Procédé destiné à détecter ou identifier un produit (1) ou des informations concernant le produit (1), d'après lequel on identifie un codage caché porté par le produit (1), **caractérisé en ce que** le codage est donné par un jeu de paramètres ellipsométriques, et le procédé englobe les étapes suivantes :
- mesure de grandeurs ellipsométriques pour au moins un lieu défini (8) sur une surface (9) du produit (1),
- comparaison des grandeurs ellipsométriques mesurées avec au moins un codage de référence,
- constatation d'une concordance des grandeurs ellipsométriques mesurées avec le codage de référence ou l'un des codages de référence, ou constatation d'une non concordance avec chaque codage de référence.

2. Procédé selon la revendication 1, **caractérisé en ce que** le jeu de paramètres ellipsométriques servant de codage pour le lieu défini (8) ou pour chacun des lieux définis (8) sur la surface (9) du produit (1), englobe deux valeurs respectivement pour chacune de plusieurs combinaisons d'au moins une longueur d'onde ou distribution de longueurs d'onde ou une plage de longueurs d'onde définie et d'au moins un angle d'incidence (α) défini, les grandeurs ellipsométriques étant mesurées pour toutes ces combinaisons de longueurs d'onde ou distributions de longueurs d'onde et d'angles d'incidence (α).

3. Procédé selon la revendication 2, **caractérisé en ce que** lesdites deux valeurs sont données chacune par une valeur ψ d'un quotient de deux coefficients de réflexion pour deux polarisations différentes, et par une variation Δ d'un décalage de phase entre de la lumière réfléchie de ces polarisations.

4. Procédé selon l'une des revendications 1 à 3, **caractérisé en ce que** les grandeurs ellipsométriques sont mesurées pour au moins deux angles d'incidence (α) différents et/ou au moins deux longueurs d'onde ou distributions de longueurs d'onde différentes.

5. Procédé selon l'une des revendications 1 à 4, **caractérisé en ce que** pour la mesure des grandeurs ellipsométriques, on éclaire la surface (9) du produit (1) avec de la lumière ultraviolette et/ou avec de la lumière du domaine du proche infrarouge.

6. Procédé selon l'une des revendications 1 à 5, **caractérisé en ce que** le codage a été préalablement appliqué de manière artificielle sur ledit au moins un lieu (8) du produit (1), par revêtement et/ou structuration de la surface (9), le codage appliqué artificiellement étant donné par un système de couches de Fabry-Pérot (11) ou un système de couches diélectrique.

7. Procédé selon la revendication 6, **caractérisé en ce que** le codage appliqué artificiellement n'est pas décelable à l'oeil nu.

8. Procédé selon l'une des revendications 6 ou 7, **caractérisé en ce que** le codage appliqué artificiellement renferme une dépendance de lieu définie des grandeurs ellipsométriques.

9. Procédé selon la revendication 8, **caractérisé en ce que** le codage renferme un code-barres ou au moins un autre codage géométrique.

10. Procédé selon l'une des revendications 6 à 9, **caractérisé en ce que** le codage est défini exclusivement par des propriétés de surface d'au moins une étiquette (10) appliquée, ou par une combinaison de propriétés de surface d'au moins une étiquette (10) appliquée et d'une surface naturelle (9) entourant ladite au moins une étiquette (10).

11. Procédé selon l'une des revendications 1 à 10, **caractérisé en ce que** les grandeurs ellipsométriques sont mesurées par ellipsométrie à annulation et/ou par ellipsométrie à imagerie.

12. Procédé selon l'une des revendications 1 à 11, **caractérisé en ce que** le codage est représentatif d'une authenticité du produit (1), de l'affectation du produit (1) à une série définie, ou d'un entretien effectué ou d'un traitement défini ou d'un état de fatigue du produit (1).

13. Dispositif destiné à détecter ou identifier un produit ou des informations concernant le produit (1), par identification d'un codage caché porté par le produit (1), **caractérisé en ce que** le dispositif comprend
- un ellipsomètre (2) pour mesurer des grandeurs ellipsométriques d'une surface (9) du produit (1), et
- une mémoire (3) qui est reliée à l'ellipsomètre (2) par une ligne de transmission de données (5) ou est intégrée à l'ellipsomètre (2), et qui fait office de banque de données pour au moins un jeu de paramètres ellipsométriques, qui y est mémorisé et sert de codage,
le dispositif étant conçu, sur le plan de la technique de programmation, pour assurer la comparaison des grandeurs ellipsométriques mesurées à l'aide de l'ellipsomètre (2), avec ledit au moins un codage mémorisé dans la mémoire (3), et pour constater une concordance des grandeurs ellipsométriques mesurées avec le codage mémorisé ou l'un des codages mémorisés, ou constater une non concordance avec chaque codage y étant mémorisé.

14. Dispositif selon la revendication 13, **caractérisé en ce qu'**il est conçu, sur le plan de la technique de programmation, pour mettre en oeuvre un des procédés 1 à 12.

15. Système destiné à identifier des produits, comprenant un dispositif selon l'une des revendications 13 ou 14 et un ensemble de produits (1) munis chacun du codage ou de l'un des codages.

16. Utilisation d'un dispositif selon les revendications 13 ou 14
pour identifier l'authenticité du produit (1),
pour l'affectation du produit (1) à une série définie, pour identifier un entretien effectué du produit (1), pour identifier un traitement défini du produit (1),
ou pour identifier un état de fatigue du produit (1).
